# EUROPEAN PATENT APPLICATION

(11) **EP 3 712 836 A1**
(43) Date of publication of application: **23.09.2020**
(21) Application number: 18887746.8
(22) Date of filing: 03.10.2018
(51) Int. Cl.: G06Q 50/10, G01C 21/26, G06Q 30/06, G08G 1/14

(54) **PARKING SECTION MANAGEMENT SYSTEM, PARKING SECTION MANAGEMENT METHOD AND PROGRAM**

(30) Priority: 11.12.2017 JP 2017236642
(71) Applicant: JVCKenwood Corporation, Yokohama-shi, Kanagawa 2210022 (JP)
(72) Inventor: TOKITA, Shigetoshi, Yokohama-shi, Kanagawa 221-0022 (JP)
(74) Representative: Klang, Alexander H.
(86) International application number: PCT/JP2018/037124
(87) International publication number: WO 2019/116688

(57) **Abstract**

A parking lot management system includes a parking lot identifying unit (11) configured to identify position information on a parking lot; a vehicle position information acquiring unit (12) configured to acquire current position information on a vehicle; a detecting unit (13) configured to detect a relative positional relationship between the parking lot and the vehicle based on the positional information on the parking lot and the current position information on the vehicle; a determining unit (14) configured to determine whether the parking lot is rentable based on a detection result obtained by the detecting unit; and a rental processing unit (15) configured to set the parking lot to be rentable or unrentable based on a determination result obtained by the determining unit.

## Description

### Field

The present invention relates to a parking lot management system, a parking lot management method, and a program.

### Background

A parking lot reservation system for making a reservation for a pay-by-the-hour parking lot has been known (for example, see Patent Literature 1). In the technology described in Patent Literature 1, if a parking lot for which someone desires to make a reservation is full, unloading request data for requesting unloading from the parking lot is transmitted to a user of the parking lot.

For example, a parking lot share service for temporarily renting out a home parking lot has been known. In the parking lot share service, a person who desires to rent out his/her home parking lot registers a rentable period thereof. Then, a person who desires to use the home parking lot uses the home parking lot after confirming the rentable period.

### Citation List

### Patent Literature

Patent Literature 1: Japanese Laid-open Patent Publication No. 2012-215923

### Summary

### Technical Problem

However, in the parking lot share service, it takes time and effort for the person who desires to rent out his/her home parking lot to register the rentable period every time he/she desires to rent out the parking lot. Further, when the rentable period is registered in advance, it is necessary for the person who desires to rent out his/her home parking lot to change the rentable period when he/she becomes unable to rent out the parking lot due to a change of schedule. If the rentable period remains registered even though rental is impossible, the user who desires to use the home parking lot may become unable to use the parking lot.

The present invention has been conceived in view of the foregoing, and an object is to provide a parking lot management system, a parking lot management method, and a program with high usability.

### Solution to Problem

According to one aspect, there is provided a parking lot management system comprising: a parking lot identifying unit configured to identify position information on a parking lot; a vehicle position information acquiring unit configured to acquire current position information on a vehicle; a detecting unit configured to detect a relative positional relationship between the parking lot and the vehicle based on the position information on the parking lot and the current position information on the vehicle; a determining unit configured to determine whether the parking lot is rentable or not based on a detection result obtained by the detecting unit; and a rental processing unit configured to set the parking lot to be rentable or unrentable based on a determination result obtained by the determining unit.

According to one aspect, there is provided a parking lot management method comprising: a parking lot identifying step of identifying position information on a parking lot; a vehicle position information acquiring step of acquiring current position information on a vehicle; a detecting step of detecting a relative positional relationship between the parking lot and the vehicle based on the position information on the parking lot and the current position information on the vehicle; a determining step of determining whether the parking lot is rentable or not based on a detection result obtained at the detecting step; and a rental processing step of setting the parking lot to be rentable or unrentable based on a determination result obtained at the determining step.

According to one aspect, there is provided a program causing a computer that functions as a parking lot management system to execute: a parking lot identifying step of identifying position information on a parking lot; a vehicle position information acquiring step of acquiring current position information on a vehicle; a detecting step of detecting a relative positional relationship between the parking lot and the vehicle based on the position information on the parking lot and the current position information on the vehicle; a determining step of determining whether the parking lot is rentable or not based on a detection result obtained at the detecting step; and a rental processing step of setting the parking lot to be rentable or unrentable based on a determination result obtained at the determining step.

### Advantageous Effects of Invention

According to the present invention, it is possible to provide a parking lot management system, a parking lot management method, and a program with high usability.

### Brief Description of Drawings

FIG. 1 is a schematic diagram illustrating a configuration example of a parking lot rental service including a parking lot management system according to a first embodiment.
FIG. 2 is a block diagram illustrating a configuration example of the parking lot management system according to the first embodiment.
FIG. 3 is a flowchart illustrating a flow of processes performed by the parking lot management system according to the first embodiment.
FIG. 4 is a flowchart illustrating the flow of processes performed by the parking lot management system according to the first embodiment.
FIG. 5 is a block diagram illustrating a configuration example of a parking lot management system according to a second embodiment.
FIG. 6 is a flowchart illustrating a flow of processes performed by the parking lot management system according to the second embodiment.
FIG. 7 is a flowchart illustrating the flow of processes performed by the parking lot management system according to the second embodiment.
FIG. 8 is a block diagram illustrating a configuration example of a parking lot management system according to a third embodiment.
FIG. 9 is a flowchart illustrating a flow of processes performed by the parking lot management system according to the third embodiment.
FIG. 10 is a flowchart illustrating the flow of processes performed by the parking lot management system according to the third embodiment.

### Description of Embodiments

Exemplary embodiments of a parking lot management system 10, a parking lot management method, and a program according to the present invention will be described in detail below with reference to the accompanying drawings. The present invention is not limited by the embodiments below.

### First Embodiment

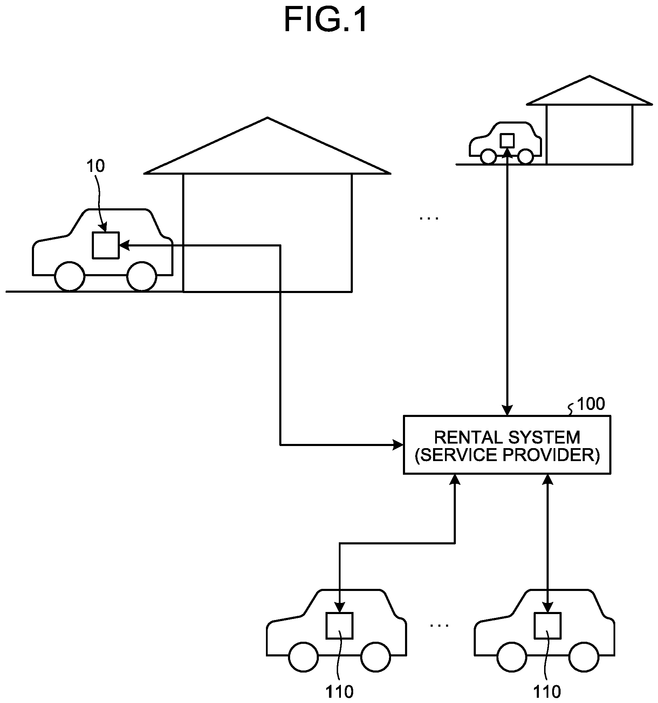

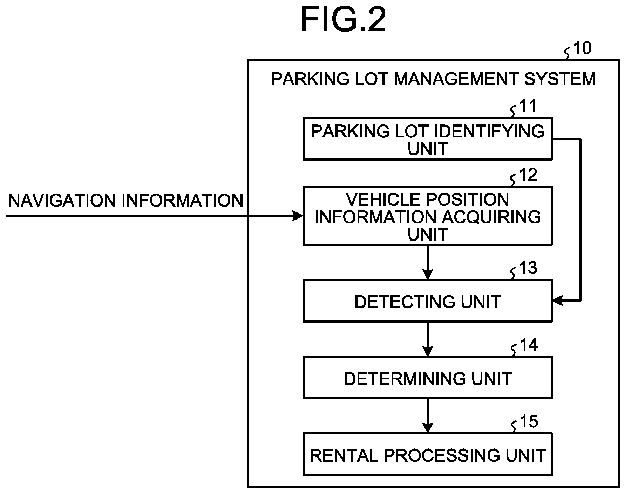

FIG. 1 is a schematic diagram illustrating a configuration example of a parking lot rental service including a parking lot management system according to a first embodiment. FIG. 2 is a block diagram illustrating a configuration example of the parking lot management system according to the first embodiment. In the parking lot rental service, a parking place (parking lot), such as a home parking lot or a parking lot of a company or an organization which is used by a specific vehicle, is temporarily rented out to a third party as a person who desires to use the parking place for only a limited rentable time such as an unused time. In the first embodiment, an explanation will be given based on the assumption that, in the parking lot rental service, a person who desires to ret out his/her home parking lot rents out the home parking lot and a person who desires to use the home parking lot uses the home parking lot via a service provider that manages rental, use, and fee collection with respect to the home parking lot. In the parking lot rental service, a parking lot management system 10, a rental system 100, and a reservation system 110 are connected so as to be able to transmit and receive data to and from one another.

The rental system 100 is managed by a service provider that provides the parking lot rental service. The rental system 100 manages rental time data, reservation data, and rental data on each of home parking lots. More specifically, the rental system 100 receives the rental time data on each of the home parking lots from the parking lot management system 10. The rental system 100 transmits the rental time data to the reservation system 110 based on the received rental time data on each of the home parking lots. Further, the rental system 100 receives the reservation data on each of the home parking lots from the reservation system 110. The rental system 100 changes a rental status of each of the home parking lots based on the reservation data and updates the rental data. When the rental data is updated, and if there is a person who has made a reservation and who is influenced by the update, the rental system 100 notifies the person of the change of the rental data.

The reservation system 110 is a navigation system of a vehicle of the user who desires to use the home parking lot or an electronic device carried by the user who desires to use the home parking lot. In the first embodiment, the reservation system 110 is implemented as a function of the navigation system mounted on the vehicle. The reservation system 110 receives reservation operation for each of the home parking lots, based on the rental time data acquired from the rental system 100 on each of the home parking lots. More specifically, the reservation system 110 displays a list of available parking lots located within a predetermined range from a current position, a destination position, or a desired parking position of the user who desires to use the home parking lot, based on the rental time data on each of the parking lots. The reservation system 110 generates reservation data through the reservation operation performed by the user who desires to use the home parking lot, and transmits the reservation data to the rental system 100.

The parking lot management system 10 is used by the person who desires to rent out his/her home parking lot. The parking lot management system 10 is a navigation system of a vehicle of the person who desires to rent out his/her home parking lot or an electronic device carried by the person who desires to rent out his/her home parking lot. It is preferable that the electronic device is able to perform communication with the navigation system of the vehicle of the person who desires to rent out his/her home parking lot and is able to determine that the electronic device is moving together with the vehicle. In the first embodiment, the parking lot management system 10 is implemented as a function of the navigation system mounted on the vehicle. The parking lot management system 10 is, for example, an arithmetic processing device constructed with a central processing unit (CPU) or the like. The parking lot management system 10 executes commands included in a program that is stored in a storage (not illustrated). The parking lot management system 10 automatically sets a rental time during which the home parking lot is rentable, and generates the rental time data. The parking lot management system 10 transmits the rental time data to the rental system 100. The parking lot management system 10 includes a parking lot identifying unit 11, a vehicle position information acquiring unit 12, a detecting unit 13, a determining unit 14, and a rental processing unit 15.

The parking lot identifying unit 11 identifies position information on the home parking lot. The parking lot identifying unit 11 may acquire the position information on the home parking lot from the navigation system. Alternatively, the parking lot identifying unit 11 may acquire the position information on the home parking lot that is stored, in advance, in a storage (not illustrated) of the parking lot management system 10. Alternatively, the parking lot identifying unit 11 may acquire the position information on the home parking lot that is stored, in advance, in a storage (not illustrated) of the rental system 100. The parking lot identifying unit 11 outputs the identified position information on the home parking lot to the detecting unit 13.

The vehicle position information acquiring unit 12 acquires current position information on the vehicle. In the first embodiment, the vehicle position information acquiring unit 12 acquires the current position information on the vehicle based on navigation information that is acquired from the navigation system. The vehicle position information acquiring unit 12 outputs the acquired current position information on the vehicle to the detecting unit 13.

The detecting unit 13 detects a relative positional relationship between the home parking lot and the vehicle based on the position information on the home parking lot and the current position information on the vehicle. More specifically, the detecting unit 13 detects that the vehicle has left the home parking lot based on the position information on the home parking lot identified by the parking lot identifying unit 11 and based on the current position information on the vehicle acquired by the vehicle position information acquiring unit 12. In the first embodiment, the detecting unit 13 detects that the vehicle has moved a predetermined distance or longer away from the home parking lot based on the position information on the home parking lot and the current position information on the vehicle. Alternatively, the detecting unit 13 detects that the vehicle has started to move to the home parking lot based on the position information on the home parking lot and the current position information on the vehicle. In the first embodiment, the detecting unit 13 detects that the vehicle has approached to the home parking lot within a predetermined distance based on the position information on the home parking lot and the current position information on the vehicle.

It is assumed that the predetermined distance is, for example, a distance for which the vehicle takes more than one hour to drive. For example, the predetermined distance may be set to about 10 kilometers.

The determining unit 14 determines whether the home parking lot is rentable or not based on a detection result obtained by the detecting unit 13. More specifically, the determining unit 14 determines that the home parking lot is rentable when the vehicle has left the home parking lot, based on the detection result obtained by the detecting unit 13. In the first embodiment, the determining unit 14 determines that the home parking lot is rentable when the vehicle has moved a predetermined distance or longer away from the home parking lot based on the detection result obtained by the detecting unit 13. Alternatively, the determining unit 14 determines that the home parking lot is unrentable when the vehicle has started to move to the home parking lot based on the detection result obtained by the detecting unit 13. In the first embodiment, the determining unit 14 determines that the home parking lot is unrentable when the vehicle has approached to the home parking lot within a predetermined distance based on the detection result obtained by the detecting unit 13.

It is assumed that the predetermined distance is, for example, a distance for which the vehicle takes less than 50 minutes to return to the home. For example, the predetermined distance may be set to about 9 kilometers.

The rental processing unit 15 sets the home parking lot to be rentable or unrentable based on a determination result obtained by the determining unit 14. More specifically, when the determination result obtained by the determining unit 14 indicates rentable, the rental processing unit 15 may set the home parking lot to be rentable by setting a rentable status of the home parking lot to "rentable". When the determination result obtained by the determining unit 14 indicates rentable, the rental processing unit 15 may set the home parking lot to be rentable by generating rental time data in which a rental start time of the home parking lot is set to a current time. In this case, the rental processing unit 15 may set a rental termination time in accordance with a time that is required for the vehicle to return to the home parking lot from the current position. Alternatively, the rental processing unit 15 may set the rental termination time to a certain time that is set in advance.

When the determination result obtained by the determining unit 14 indicates unrentable, the rental processing unit 15 may set the home parking lot to be unrentable by setting the rentable status of the home parking lot to "unrentable". When the determination result obtained by the determining unit 14 is unrentable, the rental processing unit 15 may set the home parking lot to be unrentable by generating rental time data in which the rental termination time of the home parking lot is set to an expected time of arrival to the home parking lot. The rental processing unit 15 restricts a change to an unrentable status with respect to a time during which the user who desires to use the home parking lot uses the parking lot. The expected time of arrival to the home parking lot is calculated based on the position information on the home parking lot and the current position information on the vehicle.

When the home parking lot is not set to be unrentable at the rental termination time, the rental processing unit 15 may make a setting so as to extend the rental termination time in accordance with a time that is required for the vehicle to return from the current position to the home parking lot. Alternatively, the rental processing unit 15 may extend the rental termination time by a certain time that is set in advance.

In the first embodiment, the rental processing unit 15 sets the home parking lot to be rentable or unrentable by setting a rental time and generating the rental time data in accordance with the determination result obtained by the determining unit 14. The rental processing unit 15 transmits the position information on the home parking lot and the rental time data to the rental system 100.

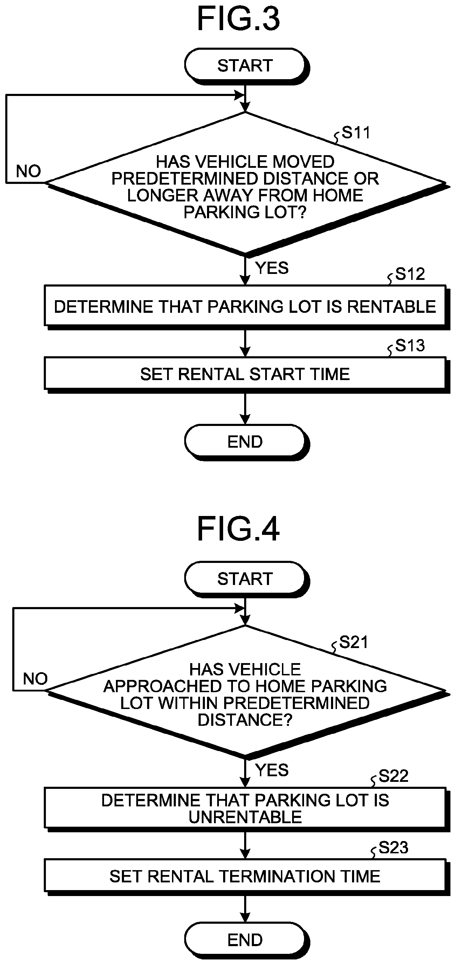

Next, information processing performed by the parking lot management system 10 will be described with reference to FIG. 3 and FIG. 4. FIG. 3 is a flowchart illustrating a flow of processes performed by the parking lot management system according to the first embodiment. FIG. 4 is a flowchart illustrating a flow of processes performed by the parking lot management system according to the first embodiment. The processes in the flowcharts illustrated in FIG. 3 and FIG. 4 are based on the assumption that the navigation system is activated during a period in which the vehicle is operating. The vehicle position information acquiring unit 12 continuously acquires the current position information on the vehicle from the navigation system.

First, a process of setting the home parking lot to be rentable will be described with reference to FIG. 3.

The parking lot management system 10 determines whether the vehicle has moved a predetermined distance or longer away from the home parking lot (Step S11). More specifically, the parking lot management system 10 causes the detecting unit 13 to detect whether the current position information on the vehicle is separated from the position information on the home parking lot by the predetermined distance or longer based on the position information on the home parking lot identified by the parking lot identifying unit 11 and the current position information on the vehicle acquired by the vehicle position information acquiring unit 12. When the current position information on the vehicle is separated from the position information on the home parking lot by the predetermined distance or longer based on the detection result obtained by the detecting unit 13 (YES at Step S11), the parking lot management system 10 proceeds to Step S12. When the current position information on the vehicle is not separated from the position information on the home parking lot by the predetermined distance or longer based on the detection result obtained by the detecting unit 13 (NO at Step S11), the parking lot management system 10 performs the process at Step S11 again.

When the current position information on the vehicle is separated from the position information on the home parking lot by the predetermined distance or longer (YES at Step S11), the parking lot management system 10 causes the determining unit 14 to determine that the parking lot is rentable (Step S12). The parking lot management system 10 proceeds to Step S13.

The parking lot management system 10 sets a rental start time (Step S13). More specifically, the parking lot management system 10 causes the rental processing unit 15 to generate rental time data in which the rental start time of the home parking lot is set to a current time, and sets the home parking lot to be rentable. The parking lot management system 10 transmits the position information on the home parking lot and the rental time data to the rental system 100 and terminates the process.

Next, a process of setting the home parking lot to be unrentable will be described with reference to FIG. 4.

The parking lot management system 10 determines whether the vehicle has approached to the home parking lot within a predetermined distance (Step S21). More specifically, the parking lot management system 10 causes the detecting unit 13 to detect whether the current position information on the vehicle has approached to the position information on the home parking lot within the predetermined distance based on the position information on the home parking lot identified by the parking lot identifying unit 11 and the current position information on the vehicle acquired by the vehicle position information acquiring unit 12. When the current position information on the vehicle has approached to the position information on the home parking lot within the predetermined distance based on the detection result obtained by the detecting unit 13 (YES at Step S21), the parking lot management system 10 proceeds to Step S22. When the current position information on the vehicle has not approached to the position information on the home parking lot within the predetermined distance based on the detection result obtained by the detecting unit 13 (NO at Step S22), the parking lot management system 10 performs the process at Step S21 again.

When the current position information on the vehicle has approached to the position information on the home parking lot within the predetermined distance (YES at Step S21), the parking lot management system 10 causes the determining unit 14 to determine that the parking lot is unrentable (Step S22). The parking lot management system 10 proceeds to Step S23.

The parking lot management system 10 sets the rental termination time (Step S23). More specifically, the parking lot management system 10 causes the rental processing unit 15 to generate rental time data in which the rental termination time of the home parking lot is set to an expected time of arrival to the home parking lot, and sets the home parking lot to be unrentable. The parking lot management system 10 transmits the position information on the home parking lot and the rental time data to the rental system 100 and terminates the process.

In this manner, the parking lot management system 10 sets the home parking lot to be rentable when detecting that the vehicle has moved the predetermined distance or longer away from the home parking lot. The parking lot management system 10 sets the home parking lot to be unrentable when detecting that the vehicle has approached to the home parking lot within the predetermined distance. Further, the parking lot management system 10 automatically extends the rental termination time of the home parking lot when the home parking lot is not set to be unrentable at the set rental termination time.

As described above, according to the first embodiment, it is possible to set rentability of the home parking lot based on the current position information on the vehicle and the position information on the home parking lot. According to the first embodiment, it is possible to automatically set the rentability of the home parking lot without need for the person who desires to rent out his/her home parking lot to register a rentable period. Further, according to the first embodiment, it is possible to automatically extend the rental termination time of the home parking lot when the home parking lot is not set to be unrentable at the set rental termination time. In this manner, in the first embodiment, it is possible to reduce time and effort of the person who desires to rent out his/her home parking lot and improve usability.

Furthermore, according to the first embodiment, actual usage of the home parking lot is detected using the relative positional relationship between the home parking lot and the vehicle which is detected based on the position information on the home parking lot and the current position information on the vehicle. Therefore, in the first embodiment, it is possible to automatically set the rentability of the home parking lot based on the actual usage of the home parking lot. Consequently, even when the schedule is suddenly changed, it is possible to accurately set the rentability of the home parking lot. Moreover, because the rentability is accurately set, it is possible to improve usability when the user who desires to use the home parking lot uses the parking lot.

### Second Embodiment

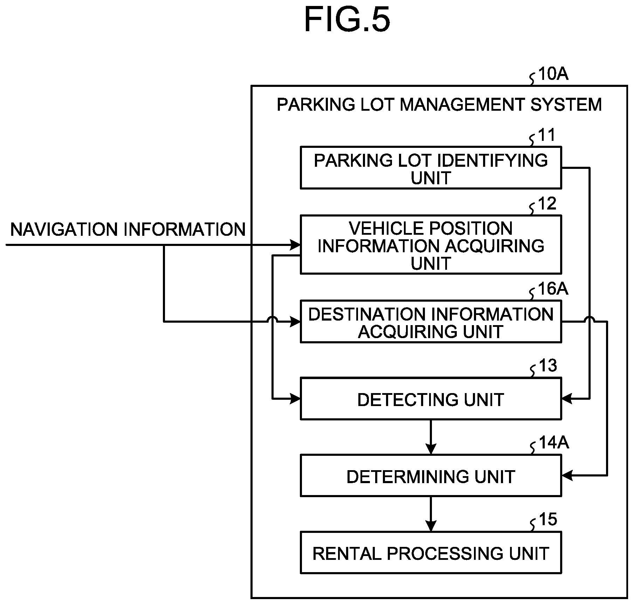

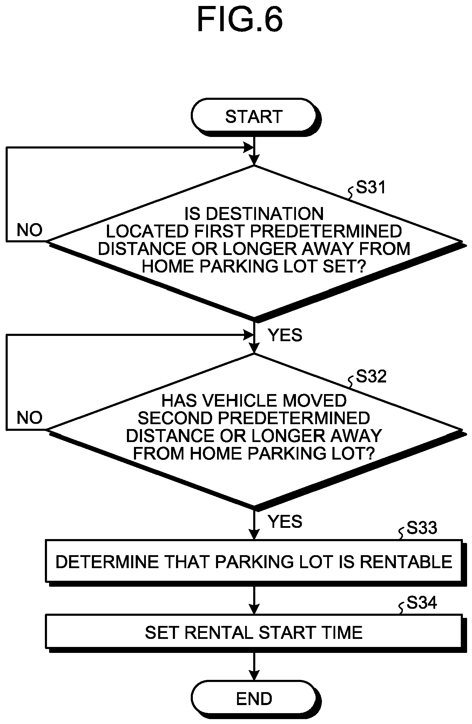

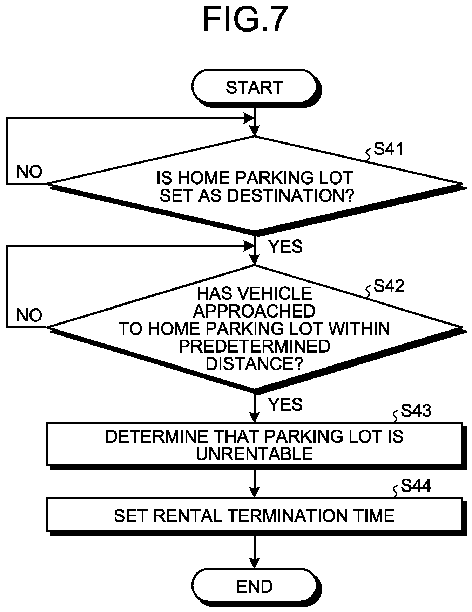

A parking lot management system 10A according to a second embodiment will be described with reference to FIG. 5 to FIG. 7. FIG. 5 is a block diagram illustrating a configuration example of the parking lot management system according to the second embodiment. FIG. 6 is a flowchart illustrating a flow of processes performed by the parking lot management system according to the second embodiment. FIG. 7 is a flowchart illustrating a flow of processes performed by the parking lot management system according to the second embodiment. A basic configuration of the parking lot management system 10A according to the second embodiment is the same as the parking lot management system 10 of the first embodiment. In the following description, the same components as those of the parking lot management system 10 will be denoted by the same or corresponding reference symbols, and detailed explanation thereof will be omitted. The parking lot management system 10A of the second embodiment is different from the parking lot management system 10 of the first embodiment in that the parking lot management system 10A includes a destination information acquiring unit 16A and performs different information processing.

The destination information acquiring unit 16A acquires set-destination information that is set in a vehicle based on navigation information acquired from the navigation system.

A determining unit 14A determines, when the destination information acquiring unit 16A has acquired the set-destination information in which a destination that is located a first predetermined distance or longer away from the home parking lot is set, that the home parking lot is rentable based on the detection result obtained by the detecting unit 13. More specifically, when a destination that is located the first predetermined distance or longer away from the home parking lot is set and when the vehicle has moved a second predetermined distance or longer away from the home parking lot, the determining unit 14A determines that the home parking lot is rentable.

The first predetermined distance may be the same distance as the second predetermined distance, or the first predetermined distance may be longer than the second predetermined distance. For example, the first predetermined distance is set to a distance for which the vehicle takes more than one hour to drive. For example, the second predetermined distance is set to a distance for which the vehicle takes more than 30 minutes to drive. For example, the first predetermined distance may be set to about 10 kilometers. For example, the second predetermined distance may be set to about 5 kilometers.

Further, the determining unit 14A determines, when the destination information acquiring unit 16A has acquired the set-destination information in which the home parking lot is set as a destination, that the home parking lot is unrentable based on the detection result obtained by the detecting unit 13. More specifically, when the home parking lot is set as a destination and when the vehicle has approached to the home parking lot within a predetermined distance, the determining unit 14A determines that the home parking lot is unrentable. Setting the home parking lot as the destination means setting the home as the destination, and the same applies when the home is set as the destination when the home parking lot is located away from the home, for example.

Next, the information processing performed by the parking lot management system 10A will be described with reference to FIG. 6 and FIG. 7. The processes in the flowcharts illustrated in FIG. 6 and FIG. 7 are based on the assumption that a navigation system is activated during a period in which the vehicle is operating. The vehicle position information acquiring unit 12 continuously acquires the current position information on the vehicle from the navigation system. The destination information acquiring unit 16A continuously acquires the set-destination information on the vehicle from the navigation system.

First, a process of setting the home parking lot to be rentable will be described with reference to FIG. 6. The processes from Step S32 to Step S34 in the flowchart illustrated in FIG. 6 are the same as the processes from Step S11 to Step S13 in the flowchart illustrated in FIG. 3.

The parking lot management system 10A determines whether a destination located the first predetermined distance or longer away from the home parking lot is set (Step S31). More specifically, the parking lot management system 10A determines whether the destination information acquiring unit 16A has acquired the set-destination information that is located the first predetermined distance or longer away from the home parking lot. When a destination located the first predetermined distance or longer away from the home parking lot is set (YES at Step S31), the parking lot management system 10A proceeds to Step S32. When a destination located the first predetermined distance or longer away from the home parking lot is not set (NO at Step S31), the parking lot management system 10A performs the process at Step S31 again.

Next, a process of setting the home parking lot to be unrentable will be described with reference to FIG. 7. The processes from Step S42 to Step S44 in the flowchart illustrated in FIG. 7 are the same as the processes from Step S21 to Step S23 in the flowchart illustrated in FIG. 4.

The parking lot management system 10 determines whether the home parking lot is set as a destination (Step S41). More specifically, the parking lot management system 10 determines whether the destination information acquiring unit 16A has acquired the set-destination information in which the home parking lot is set as a destination. When the home parking lot is set as a destination (YES at Step S41), the parking lot management system 10 proceeds to Step S42. When the home parking lot is not set as a destination (NO at Step S41), the parking lot management system 10 performs the process at Step S41 again.

In this manner, the parking lot management system 10 determines that the home parking lot is rentable when a destination that is located the first predetermined distance or longer away from the home parking lot is set and when it is detected that the vehicle has moved the second predetermined distance or longer away from the home parking lot. The parking lot management system 10 determines that the home parking lot is unrentable when the home parking lot is set as a destination and when it is detected that the vehicle has approached to the home parking lot within the predetermined distance.

As described above, according to the second embodiment, it is possible to more accurately set the rentability of the home parking lot based on the set-destination information on the vehicle, the current position information on the vehicle, and the position information on the home parking lot.

### Third Embodiment

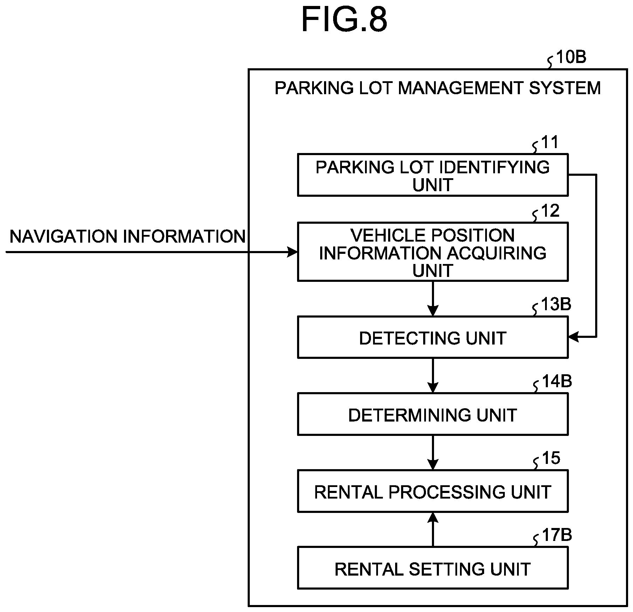

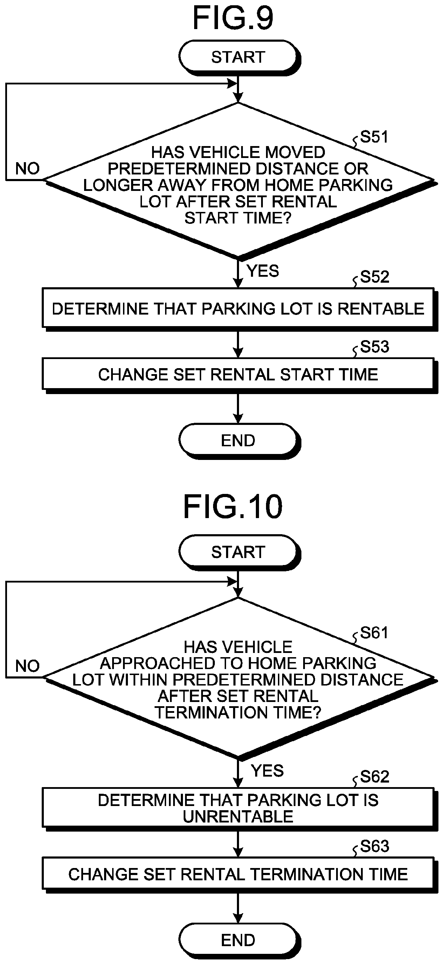

A parking lot management system 10B according to a third embodiment will be described with reference to FIG. 8 to FIG. 10. FIG. 8 is a block diagram illustrating a configuration example of the parking lot management system according to the third embodiment. FIG. 9 is a flowchart illustrating a flow of processes performed by the parking lot management system according to the third embodiment. FIG. 10 is a flowchart illustrating a flow of processes performed by the parking lot management system according to the third embodiment. A basic configuration of the parking lot management system 10B according to the third embodiment is the same as the parking lot management system 10 of the first embodiment. The parking lot management system 10B of the third embodiment is different from the parking lot management system 10 of the first embodiment in that the parking lot management system 10B includes a rental setting unit 17B and performs different information processing.

The rental setting unit 17B transmits rentable period data on a rentable period that is set in advance by a person who desires to rent his/her parking lot to the rental system 100, together with the position information on the home parking lot. More specifically, the rental setting unit 17B transmits information on a rentable period including at least one of a rental start time and a rental termination time, such as "8:00 to 17:00 on weekdays" or "10:00 to 23:00 on January 1, 2018", as the rentable period data to the rental system 100, together with the position information on the home parking lot.

A detecting unit 13B detects that the vehicle has left the home parking lot based on the position information on the home parking lot identified by the parking lot identifying unit 11 and the current position information on the vehicle acquired by the vehicle position information acquiring unit 12 after the rental start time of the rentable period set by the rental setting unit 17B. In the third embodiment, the detecting unit 13B detects that the vehicle has moved a predetermined distance or longer away from the home parking lot based on the position information on the home parking lot and the current position information on the vehicle after the rental start time of the rentable period. Alternatively, the detecting unit 13B detects that the vehicle has started to move to the home parking lot based on the position information on the home parking lot and the current position information on the vehicle after the rental termination time of the rentable period. In the third embodiment, the detecting unit 13B detects that the vehicle has approached to the home parking lot within a predetermined distance based on the position information on the home parking lot and the current position information on the vehicle after the rental termination time of the rentable period.

Alternatively, the detecting unit 13B may detect that the vehicle has approached the home parking lot within a predetermined distance based on the position information on the home parking lot and the current position information on the vehicle a predetermined time before the rental termination time. The predetermined time before the rental termination time is normally a time of departure to the home parking lot or a time that is arbitrarily set by a person who desires to rent his/her parking lot, and is set to about one hour, for example.

A determining unit 14B determines that the home parking lot is rentable when the vehicle has left the home parking lot based on a detection result obtained by the detecting unit 13B after the rental start time. In the third embodiment, the determining unit 14B determines that the home parking lot is rentable when the vehicle has moved the predetermined distance or longer away from the home parking lot based on the detection result obtained by the detecting unit 13B after the rental start time. Alternatively, the determining unit 14B determines that the home parking lot is unrentable when the vehicle has started to move to the home parking lot based on the detection result obtained by the detecting unit 13B after the rental termination time. In the third embodiment, the determining unit 14B determines that the home parking lot is unrentable when the vehicle has approached to the home parking lot within the predetermined distance based on the detection result obtained by the detecting unit 13B after the rental termination time.

A rental processing unit 15B sets the home parking lot to be rentable depending on the determination result obtained by the determining unit 14B after the rental start time. The rental processing unit 15B sets the home parking lot to be unrentable depending on the determination result obtained by the determining unit 14B after the rental termination time.

Next, the information processing performed by the parking lot management system 10A will be described with reference to FIG. 9 and FIG. 10.

First, a process of setting the home parking lot to be rentable will be described with reference to FIG. 9. The process at Step S52 in the flowchart illustrated in FIG. 9 is the same as the process at Step S12 in the flowchart illustrated in FIG. 3.

The parking lot management system 10B determines whether the vehicle has moved a predetermined distance or longer away from the home parking lot after the set rental start time (Step S51). When the current position information on the vehicle is separated from the position information on the home parking lot by the predetermined distance or longer based on the detection result obtained by the detecting unit 13B after the set rental start time (YES at Step S51), the parking lot management system 10B proceeds to Step S52. When the current position information on the vehicle is not separated from the position information on the home parking lot by the predetermined distance or longer based on the detection result obtained by the detecting unit 13B after the set rental start time (NO at Step S51), the parking lot management system 10B performs the process at Step S51 again.

The parking lot management system 10B changes the set rental start time (Step S53). More specifically, the parking lot management system 10B causes the rental processing unit 15B to change the set rental start time of the home parking lot to a current time, and sets the home parking lot to be rentable. The parking lot management system 10B transmits the position information on the home parking lot and rentable period data to the rental system 100 and terminates the process.

Next, a process of setting the home parking lot to be unrentable will be described with reference to FIG. 10. The process performed at Step S62 in the flowchart illustrated in FIG. 10 is the same as the process at Step S22 in the flowchart illustrated in FIG. 4.

The parking lot management system 10B determines whether the vehicle has approached to the home parking lot within the predetermined distance after the set rental termination time (Step S61). When the current position information on the vehicle has approached to the position information on the home parking lot within the predetermined distance based on the detection result obtained by the detecting unit 13B after the set rental termination time (YES at Step S61), the parking lot management system 10B proceeds to Step S62. When the current position information on the vehicle has not approached to the position information on the home parking lot within the predetermined distance based on the detection result obtained by the detecting unit 13B after the set rental termination time (NO at Step S62), the parking lot management system 10B performs the process at Step S61 again.

The parking lot management system 10B changes the set rental termination time (Step S63). More specifically, the parking lot management system 10B causes the rental processing unit 15B to change the set rental termination time of the home parking lot to a time of arrival to the home parking lot, and sets the home parking lot to be unrentable. The parking lot management system 10B transmits the position information on the home parking lot and rentable period data to the rental system 100 and terminates the process.

As described above, when the person who desires to rent out his/her home parking lot sets the rentable period in advance, and when the parking lot management system 10 determines that the vehicle has moved a predetermined distance or longer away from the home parking lot, the parking lot management system 10 sets the home parking lot to be rentable. When the parking lot management system 10 detects that the vehicle has approached to the home parking lot within a predetermined distance, the parking lot management system 10 sets the home parking lot to be unrentable. Even when the rentable period has been set, rentability of the home parking lot is automatically set depending on actual usage of the home parking lot.

As described above, according to the third embodiment, it is possible to change the rental start time or the rental termination time of the home parking lot that is set in advance based on the current position information on the vehicle and the position information on the home parking lot. According to the third embodiment, when the person who desires to rent out his/her home parking lot sets the rentable period in advance, it is possible to automatically change the rental start time or the rental termination time of the home parking lot. Therefore, according to the third embodiment, even when a schedule is suddenly changed for example, it is not necessary for the person who desires to rent out his/her home parking lot to manually change the rentable period, and thereby it is possible to improve usability.

The components of the parking lot management system 10 illustrated in the drawings are conceptual function, and need not be physically configured in the manner as illustrated in the drawings. In other words, specific forms of the apparatuses are not limited to those illustrated in the drawings, and all or part of the apparatuses may be functionally or physically distributed or integrated in arbitrary units depending on various loads or use conditions.

The configuration of the parking lot management system 10 is realized as software by, for example, a program or the like loaded on a memory. In the embodiments described above, it is explained that the functional blocks are implemented by cooperation with hardware or software. In other words, the functional blocks are realized in various forms using only hardware, using only software, or using a combination of hardware and software.

The components described above include one that can easily be thought of by a person skilled in the art and one that is practically identical. Further, the configurations described above may be combined appropriately. Furthermore, within the scope not departing from the gist of the present invention, various omission, replacement, and modifications of the components may be made.

For example, when a home parking lot is repeatedly set to be rentable at a predetermined time on a predetermined day, such as an absent time due to work or school, the parking lot management system 10 may store therein a route of the vehicle, detect that the vehicle takes the route, and set the rentability. More specifically, the detecting unit 13 determines that the vehicle has left the home parking lot and is taking the route at the predetermined time on the predetermined day based on the position information on the home parking lot and the current position information on the vehicle. Alternatively, the detecting unit 13 detects that the vehicle has left to the home parking lot and is taking the route at the predetermined time on the predetermined day based on the position information on the home parking lot and the current position information on the vehicle. When the vehicle has moved a predetermined distance or longer away from the home parking lot and when the vehicle is taking the route at the predetermined time on the predetermined day, the determining unit 14 determines that the home parking lot is rentable. When the vehicle approaches to the home parking lot within a predetermined distance and when the vehicle is taking the route at the predetermined time on the predetermined day, the determining unit 14 determines that the home parking lot is unrentable. With this configuration, it is possible to more accurately set the rentability of the home parking lot.

While it is explained that the parking lot management system 10 is the navigation system of the vehicle of the person who desires to rent out his/her home parking lot or the electronic device carried by the person who desires to rent out his/her home parking lot, it may be possible to cause a server apparatus installed by a service provider to execute a process of at least one of the functions. For example, the process performed by each of the functional units of the parking lot management system 10 may be executed by a server apparatus, which is installed by a service provider and which is capable of transmitting and receiving data to and from the navigation system of the vehicle of the person who desires to rent out his/her home parking lot, based on information acquired from the navigation system of the vehicle.

While it is explained that the person who desires to rent out his/her home parking lot rents out the home parking lot and the user who desires to use the home parking lot uses the home parking lot via the service provider, it may be possible to allow the person who desires to rent out his/her home parking lot and the user who desires to use the home parking lot to directly communicate with each other without via the service provider.

### Reference Signs List

- 10: PARKING LOT MANAGEMENT SYSTEM
- 11: PARKING LOT IDENTIFYING UNIT
- 12: VEHICLE POSITION INFORMATION ACQUIRING UNIT
- 13: DETECTING UNIT
- 14: DETERMINING UNIT
- 15: RENTAL PROCESSING UNIT
- 100: RENTAL SYSTEM
- 110: RESERVATION SYSTEM

## Claims

1. A parking lot management system comprising:
a parking lot identifying unit configured to identify position information on a parking lot;
a vehicle position information acquiring unit configured to acquire current position information on a vehicle;
a detecting unit configured to detect a relative positional relationship between the parking lot and the vehicle based on the position information on the parking lot and the current position information on the vehicle;
a determining unit configured to determine whether the parking lot is rentable or not based on a detection result obtained by the detecting unit; and
a rental processing unit configured to set the parking lot to be rentable or unrentable based on a determination result obtained by the determining unit.

2. The parking lot management system according to claim 1, wherein
the detecting unit is further configured to detect that the vehicle has left the parking lot based on the position information on the parking lot and the current position information on the vehicle, and
the determining unit is further configured to determine that the parking lot is rentable when the vehicle has left the parking lot based on the detection result obtained by the detecting unit.

3. The parking lot management system according to claim 1 or 2, wherein
the detecting unit is further configured to detect that the vehicle has moved a predetermined distance or longer away from the parking lot based on the position information on the parking lot and the current position information on the vehicle, and
the determining unit is further configured to determine that the parking lot is rentable when the vehicle has moved the predetermined distance or longer away from the parking lot based on the detection result obtained by the detecting unit.

4. The parking lot management system according to any one of claims 1 to 3, wherein
the detecting unit is further configured to detect that the vehicle has started to move to the parking lot based on the positional information on the parking lot and the current position information on the vehicle, and
the determining unit is further configured to determine that the parking lot is unrentable when the vehicle has started to move to the parking lot based on the detection result obtained by the detecting unit.

5. The parking lot management system according to any one of claims 1 to 3, wherein
the detecting unit is further configured to detect that the vehicle has approached to the parking lot within a predetermined distance based on the positional information on the parking lot and the current position information on the vehicle, and
the determining unit is further configured determine that the parking lot is unrentable when the vehicle has approached to the parking lot within the predetermined distance based on the detection result obtained by the detecting unit.

6. The parking lot management system according to any one of claims 1 to 5, further comprising:
a destination information acquiring unit configured to acquire set-destination information on the vehicle, wherein
the determining unit is further configured to determine, when the destination information acquiring unit has acquired the set-destination information in which a destination that is located a predetermined distance or longer away from a current position of the vehicle is set, that the parking lot is rentable based on the detection result obtained by the detecting unit.

7. The parking lot management system according to any one of claims 1 to 5, further comprising:
a destination information acquiring unit configured to acquire set-destination information on the vehicle, wherein
the determining unit is further configured to determine, when the destination information acquiring unit has acquired the set-destination information in which the parking lot is set as a destination, that the parking lot is unrentable based on the detection result obtained by the detecting unit.

8. The parking lot management system according to any one of claims 1 to 7, wherein
a rentable period of the parking lot is set in advance so as to include at least one of a rental start time and a rental termination time, and
the rental processing unit is further configured to change the rental start time set in advance or the rental termination time set in advance based on the determination result obtained by the determining unit.

9. A parking lot management method comprising:
a parking lot identifying step of identifying position information on a parking lot;
a vehicle position information acquiring step of acquiring current position information on a vehicle;
a detecting step of detecting a relative positional relationship between the parking lot and the vehicle based on the position information on the parking lot and the current position information on the vehicle;
a determining step of determining whether the parking lot is rentable or not based on a detection result obtained at the detecting step; and
a rental processing step of setting the parking lot to be rentable or unrentable based on a determination result obtained at the determining step.

10. A program causing a computer that functions as a parking lot management system to execute:
a parking lot identifying step of identifying position information on a parking lot;
a vehicle position information acquiring step of acquiring current position information on a vehicle;
a detecting step of detecting a relative positional relationship between the parking lot and the vehicle based on the position information on the parking lot and the current position information on the vehicle;
a determining step of determining whether the parking lot is rentable or not based on a detection result obtained at the detecting step; and
a rental processing step of setting the parking lot to be rentable or unrentable based on a determination result obtained at the determining step.
